# EUROPÄISCHE PATENTSCHRIFT

(11) **EP 1 986 901 B1**
(45) Veröffentlichungstag und Bekanntmachung des Hinweises auf die Patenterteilung: **17.03.2010**
(21) Anmeldenummer: 07703616.8
(22) Anmeldetag: 03.01.2007
(51) Int. Cl.: B60T 8/40

(54) **ANTRIEBSEINHEIT FÜR HYDRAULIK-KOLBENPUMPEN MIT EXZENTER EINES FAHRZEUGBREMSSYSTEMS**
DRIVE UNIT FOR HYDRAULIC PISTON PUMPS, WITH ECCENTRICS, OF A VEHICLE BRAKE SYSTEM
UNITE D'ENTRAINEMENT DE POMPES HYDRAULIQUES A PISTON AVEC EXCENTRIQUE POUR UN SYSTEME DE FREINAGE DE VEHICULE

(30) Priorität: 14.02.2006 DE 102006006684
(43) Veröffentlichungstag der Anmeldung: 05.11.2008
(73) Patentinhaber: Robert Bosch GmbH, 70442 Stuttgart (DE)
(72) Erfinder: REINER, Juergen, 88167 Gestratz (DE); MANDERSCHEID, Urs, 79206 Breisach (DE); HUDITZ, Andreas, 87545 Burgberg (DE)
(86) Internationale Anmeldenummer: PCT/EP2007/050052
(87) Internationale Veröffentlichungsnummer: WO 2007/093455

(56) Entgegenhaltungen:
- DE-A1- 1 800 633
- DE-A1- 4 304 390
- DE-A1- 19 809 592
- DE-A1-102004 027 506

## Beschreibung

### Hintergrund der Erfindung

Die Erfindung betrifft eine Antriebseinheit zum Antrieb mindestens einer, einen Kolben aufweisenden Hydraulik-Kolbenpumpe eines Fahrzeugbremssystems, mit einer rotierend antreibbaren Motorwelle, einem auf der Motorwelle angebrachten Exzenter zum Umsetzen der Drehbewegung der angetriebenen Motorwelle in eine translatorische Bewegung des Kolbens und einem auf dem Exzenter angebrachten Lager. Ferner betrifft die Erfindung ein Hydraulik-Pumpsystem für ein Fahrzeugbremssystem und ein Fahrzeugbremssystem, die eine derartige Antriebseinheit aufweisen.

Die für bekannte Fahrzeugbremssysteme, wie beispielsweise Antiblockiersysteme (ABS), verwendeten Hydraulik-Kolbenpumpen dienen der Steuerung des Drucks in Radbremszylindern. Beim ABS sind sie beispielsweise zum Rückfördern von Bremsflüssigkeit aus einem oder mehreren Radbremszylindern in einen Hauptbremszylinder vorgesehen. Das ABS arbeitet oft in Kombination mit einer Antischlupfregelung (ASR), welche ebenfalls auf Hydraulik-Kolbenpumpen zurückgreift. Ein weiteres bekanntes System, das sogenannte elektronische Stabilitätsprogramm (ESP) verbessert gegenüber ABS und ASR die Fahrsicherheit um einen weiteren Schritt. Während ABS und ASR in Fahrtlängsrichtung wirken, beeinflusst ESP die Querdynamik und ist daher im Prinzip eine Querschlupfregelung. Für alle diese Systeme und auch für weitere Systeme zur Erhöhung der Fahrsicherheit kommen Hydraulik-Kolbenpumpen zum Einsatz.

Zum Antrieb der Hydraulik-Kolbenpumpen weisen bekannte Antriebseinheiten einen Exzenter auf, um die Drehbewegung einer mittels eines Antriebsmotors angetriebenen Welle in eine translatorische Bewegung der Kolben umzusetzen, die hierfür mit ihrer Stirnseite am Außenumfang eines auf dem Exzenter angebrachten Nadellagers zur Anlage gebracht werden. Hierbei dient das Nadellager der Reibungsminderung zwischen Kolben und Exzenter. Jedoch werden von dem Exzenter auf den am Nadellager anliegenden Kolben auch Kräfte übertragen, die quer zur Längsachse des Kolbens orientiert sind, was eine Folge der Exzentrizität des Exzenters ist. Diese auf den Kolben wirkenden Querkräfte erhöhen den Verschleiß der Hydraulik-Kolbenpumpe und wirken sich somit letztlich negativ auf deren Lebensdauer aus.

Aus der DE 18 00 633 A1 ist eine Antriebseinheit zum Antrieb mindestens einer, einen Kolben aufweisenden Hydraulik-Kolbenpumpe eines Fahrzeugbremssystems bekannt, die aus den genannten Gründen bereits mit einem Querkräfte aufnehmenden Element ausgestattet ist. Letzteres besteht aus einem Rahmen und einem Gleitstein, wobei der Rahmen in einem Pumpengehäuse in Richtung der Längsachsen der Kolben geführt ist und der Gleitstein senkrecht dazu im Rahmen aufgenommen ist. Der Gleitstein nimmt in einer kreisförmigen Ausnehmung einen Exzenter und ein darauf angeordnetes Lager formschlüssig auf.

Nachteilig an dieser Anordnung ist der mehrteilige Aufbau des Elements und die Mehrzahl daran vorhandener Führungsflächen. Dies macht das Element teuer und hat einen großen Bauraumbedarf zur Folge. Zudem gefährdet die Stabilität des bekannten Elements, insbesondere bei hohen Drücken, die Funktionsfähigkeit der Kolbenpumpe und damit im Extremfall letztlich eine Bremsdruckregelung der Fahrzeugbremsanlage.

### Zugrundeliegende Aufgabe

Der Erfindung liegt die Aufgabe zugrunde, eine Antriebseinheit für Hydraulik-Kolbenpumpen eines Fahrzeugbremssystems anzugeben, die kostengünstiger, bauraumsparender und mit höher Stabilität und Funktionssicherheit ausgebildet ist

### Erfindungsgemäße Lösung

Diese Aufgabe ist erfingdungsgemäß mit einer eingangs genannten Antriebseinheit zum Antrieb mindestens einer, einen Kolben aufweisenden Hydraulik-Kolbenpumpe eines Fahrzeugbremssystems gelöst, bei der die Antriebseinheit ein Querkräfte aufnehmendes Element aufweist, um von dem Exzenter übertragene, rechtwinklig zur Längsachse des Kolbens wirkende Querkräfte aufzunehmen, wobei das Querkräfte aufnehmende Element längsbeweglich in Richtung der Längssachse des Kolbens geführt ist und zumindest teilweise zwischen dem Lager und dem Kolben angeordnet ist. Die translatorische Antriebsbewegung des Exzenters wird über ein in Richtung der Längsachse des anzutreibenden Kolbens beweglich geführtes Querkräfte aufnehmendes Element auf den anzutreibenden Kolben übertragen. Das Element ist zwischen dem anzutreibenden Kolben und dem auf dem Exzenter angebrachtem Lager angeordnet, so dass bei Drehung des Exzenters das Element in Richtung der Längsachse des anzutreibenden Kolbens vor- und zurückbewegt wird. Diese Bewegung wird auf den anzutreibenden Kolben übertragen und somit letztlich eine Pumpbewegung herbeigeführt. Aufgrund der längsbeweglichen-Führung des Elements in Richtung der Kolbenlängssachse können auf den anzutreibenden Kolben keine rechtwinklig zur Längsachse des Kolbens wirkenden Querkräfte übertragen werden, da das Querkräfte aufnehmende Element nur in Richtung der Längsachse des anzutreibenden Kolbens bewegt werden kann. Die Querkräfte werden also von dem Element aufgenommen und sind ohne Einfluss auf den anzutreibenden Kolben.

Insgesamt betrachtet kann mit der erfindungsgemäßen Antriebseinheit daher ein durch Querkräfte bedingter Verschleiß der Hydraulik-Kolbenpumpen vermieden und somit letztlich deren Lebensdauer deutlich erhöht werden. Ferner lassen sich mit der translatorischen Antriebseinheit sehr große Drücke erzielen.

Das Querkräfte aufnehmende Element ist nicht darauf beschränkt zwischen dem auf dem Exzenter angebrachten Lager und dem anzutreibenden Kolben angeordnet zu sein. Es kann auch beispielsweise ein das Lager umgebendes Element sein, welches bei Drehung des Exzenters eine translatorische Bewegung in Richtung der Kolbenlängsachse ausführt, die auf den anzutreibenden Kolben übertragen wird.

Das Querkräfte aufnehmende Element ist ein Käfig, der ein Langloch aufweist, in dem der Exzenter und das auf ihm angebrachte Lager angeordnet sind. Die translatorische Antriebsbewegung des Exzenters wird über den in Richtung der Längsachse des anzutreibenden Kolbens beweglich geführten Käfig auf den Kolben übertragen, so dass bei Drehung des Exzenters der geführte Käfig in Richtung der Längsachse des anzutreibenden Kolbens vor- und zurückbewegt wird. Diese Bewegung wird auf den anzutreibenden Kolben übertragen und somit letztlich eine Pumpbewegung herbeigeführt. Aufgrund der längsbeweglichen Führung des Käfigs in Richtung der Kolbenlängssachse werden auf den anzutreibenden Kolben keine Querkräfte übertragen. Die rechtwinklig zur Längsachse des Kolbens wirkenden Kräfte werden von dem Käfig aufgenommen und wirken daher nicht auf den anzutreibenden Kolben ein.

Die Längsachse des Langlochs erstreckt sich rechtwinklig zur Längsachse des Kolbens, wobei die Länge des Langlochs gegenüber der Breite des Langlochs um mindestens das zweifache der Exzentrizität des Exzenters vergrößert ist und die Breite des Langlochs dem Außendurchmesser des Lagers entspricht.

Mittels dieser Gestaltung des Langlochs hat zum einen die Exzentrizität des Exzenters in Längsrichtung des Langlochs keine Wirkung mehr. Ferner stellt eine Langlochbreite, die dem Außendurchmesser des Lagers entspricht, sicher, dass die Exzentrizität in Richtung Kolbenlängsachse ganz zur Wirkung kommt, um so einen spielfreien Antrieb der Hydraulik-Kolbenpumpen sicherzustellen. Die trotz dieser Lochgestaltung von dem Exzenter noch auf den Käfig übertragenen, vergleichsweise geringen Querkräfte werden vom Käfig aufgenommen.

### Vorteilhafte Weiterbildungen der Erfindung

Bei einer vorteilhaften Weiterbildung der Erfindung ist das Querkräfte aufnehmende Element zwischen zwei Linearlagern längsbeweglich in Richtung der Längsachse des anzutreibenden Kolbens geführt, die vorzugsweise in Form von Zylinderrollenlagern oder aber in Form von Gleitlagern ausgeführt sind. Insbesondere Linearlager in Form von Zylinderrollenlagern ermöglichen eine sehr reibungsarme und spielfreie Führung und sind hinsichtlich Schmierung und Wartung sehr anspruchslos.

Bei einer weiteren vorteilhaften Ausführungsform ist das auf dem Exzenter angebrachte Lager ein Wälzlager, vorzugsweise in der Form eines Nadellagers. Insbesondere eine Nadellager ist aufgrund seines vergleichsweise geringen Einbauraums und der relativ hohen Belastbarkeit im Vergleich zu Wälzlagern in Form von Kugel- und Zylinderrollenlagern für die erfindungsgemäße Antriebseinheit von Vorteil.

### Kurzbeschreibung der Zeichnung

Nachfolgend wird ein Ausführungsbeispiel einer erfindungsgemäßen Antriebseinheit anhand der beigefügten Zeichnung näher erläutert. Es zeigt:

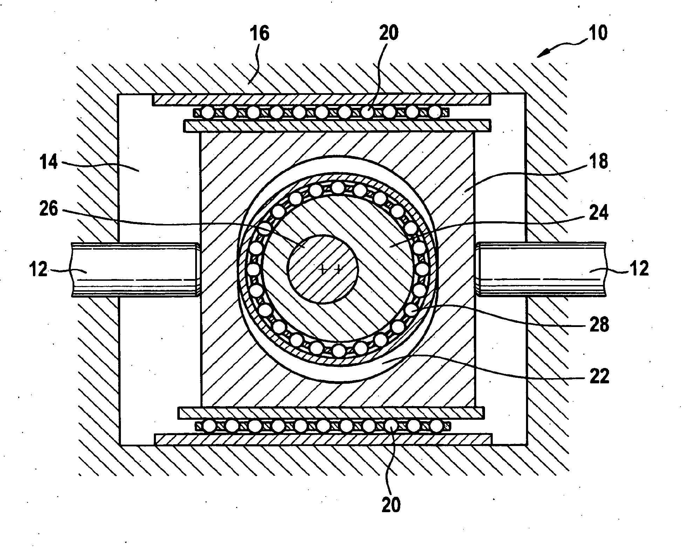

Fig. 1 eine schematische Schnittansicht einer Antriebeinheit mit zwei an die Antriebseinheit zur Anlage gebrachten Pumpenkolben.

In Fig. 1 ist eine Antriebeinheit 10 zum Antrieb der Pumpenkolben 12 zweier Hydraulik-Kolbenpumpen eines Fahrzeug-Bremssystems dargestellt.

In einem Hydraulik-Block 16 des Fahrzeugbremssystems ist ein Raum 14 ausgebildet. In den Raum 14 ragen zwei Pumpenkolben 12 zweier Hydraulik-Kolbenpumpen (nicht dargestellt), die in dem Hydraulik-Block 16 aufgenommen sind. Durch den Raum 14 erstreckt sich eine Motorwelle 26 eines Antriebsmotors (nicht dargestellt), der ebenfalls in dem Hydraulik-Block 16 aufgenommen ist. Die Motorwelle 26 ist von dem Antriebsmotor rotierend antreibbar. Auf der Motorwelle 26 ist ferner ein Exzenter 24 angebracht, entlang dessen Umfang ein Nadellager 28 angebracht ist.

In dem Raum 14 ist ein Käfig 18 angeordnet. Der Käfig 18 ist mittels zweier Linearlager 20, die als Zylinderrollenlager ausgeführt sind, längsbeweglich in Richtung der Längsachsen der Pumpenkolben 12 geführt, wobei die Linearlager 20 an der oberen und unteren Umgrenzung des Raums 14 angeordnet sind. Der Käfig 18 weist ein Langloch 22 auf, welches sich in Richtung der Längachse der Motorwelle 26 erstreckt und von der Motorwelle 26 durchsetzt ist. Innerhalb des Langlochs 22 sind der Exzenter 24 samt dem auf dem Exzenter 24 angebrachten Nadellager 28 angeordnet. Der längsbeweglich mittels der beiden Linearlager 20 in Richtung der Längsachsen der Pumpenkolben 12 geführte Käfig 18 und der Exzenter 24 samt dem auf dem Exzenter 24 angebrachten Nadellager 28 bilden in Verbindung mit der Motorwelle 26 und dem Antriebsmotor die Antriebeinheit 10 zum Antrieb der Pumpenkolben 12.

Die Drehbewegung der mittels des Antriebsmotors angetriebenen Motorwelle 26 wird über den Exzenter 24 in eine translatorische Bewegung des geführten Käfigs 18 in Richtung der Längsachse der Pumpenkolben 12 umgesetzt und zur Realisierung einer Pumpbewegung auf die an der Außenwand des Käfigs 18 zur Anlage gebrachten Pumpenkolben 12 übertragen. Das Nadellager 28 dient der Reibungsminderung zwischen Exzenter 24 und der Innenwand des Käfigs 18. Bedingt durch die Führung des Käfigs 18 zwischen den beiden Linearlagern 20 können von dem Exzenter 24 auf die Pumpenkolben 12 keine verschleißfördernden rechtwinkelig zur Längsachse der Pumpenkolben 12 wirkenden Querkräfte übertragen werden, da der Käfig 18 nur in Richtung der Längsachse der anzutreibenden Pumpenkolben 12 bewegt werden kann.

Die Pumpenkolben 12 der Hydraulik-Kolbenpumpen sind mit ihren Stirnseiten an der Außenwand des Käfigs 18 zur Anlage gebracht. Um während des Antriebs der Pumpenkolben 12 stets sicherzustellen, dass die Pumpenkolben 12 an der Außenwand des Käfigs 18 anliegen, werden sie beispielsweise mittels in den Hydraulik-Kolbenpumpen vorgesehenen gespannten Schraubenfedern gegen die Außenwand des Käfigs 18 gedrückt.

Das Langloch 22 im Käfig 18 ist derart ausgebildet, dass stets ein spielfreier Antrieb in Richtung der Längsachsen der Pumpen gewährleistet werden kann und ferner die von dem Exzenter 24 auf den Käfig 18 übertragenen Querkräfte auf ein Minimum reduziert werden können. Hierfür erstreckt sich zum einen die Längsachse des Langlochs 22 rechtwinklig zur Längsachse der Pumpenkolben 12. Ferner ist die Länge des Langlochs 22 gegenüber der Breite des Langlochs 22 um mindestens das zweifache der Exzentrizität des Exzenters 24 vergrößert. Durch die so gewählte Länge und Orientierung des Langlochs 22 in bezug zur Längsachse der Pumpenkolben 12 hat die Exzentrizität des Exzenters 24 in Längsrichtung des Langlochs 22 keine Wirkung mehr. Die durch die Exzentrizität des Exzenters 24 bedingten, rechtwinkelig zur Längsachse der Pumpenkolben 12 wirkenden und auf den Käfig 18 übertragenen Querkräfte werden somit auf ein Minimum reduziert.

Des weiteren entspricht die Breite des Langlochs 22 dem Aussendurchmesser des Nadellagers 28. Durch eine derart gewählte Langlochbreite kommt die Exzentrizität des Exzenters 24 in Richtung der Längsachsen der Pumpenkolben 12 ganz zur Wirkung, wodurch ein spielfreier Antrieb der Hydraulik-Kolbenpumpen realisiert werden kann. Von dem Exzenter 24 noch auf den Käfig 18 übertragene Kraftanteile, die quer zur Kolbenlängsachse der Pumpenkolben wirken, werden vom Käfig 18 aufgenommen und letztlich auf die beiden Linearlager 20 übertragen.

Fig. 1 zeigt den Käfig 18 in einer rechten Endlage, in der sich der an der rechten Außenwand des Käfigs 18 zur Anlage gebrachte Pumpenkolben 12 in seinem unteren Totpunkt befindet. Bei Drehung des Motors im Uhrzeigersinn erfolgt eine entsprechende Drehung des Exzenters 24, wodurch der Käfig 18 zu seiner linken Endlage hin bewegt wird, mit einer einhergehenden Bewegung des rechten Pumpenkolbens 12 in Richtung oberer Totpunkt.

Insgesamt betrachtet ermöglicht die in Fig. 1 dargestellte Antriebseinheit 10 einen spielfreien Antrieb der Pumpenkolben 12, mit der rechtwinklig zur Längsachse der Pumpenkolben 12 wirkende, von dem Exzenter 24 übertragene Querkräfte auf ein Minimum reduziert werden können. Auf die anzutreibenden Pumpenkolben 12 wirken nur in Längsrichtung derselben gerichtete Kräfte ein, wodurch die Verschleißneigung der angetriebenen Hydraulik-Kolbenpumpen deutlich reduziert wird.

## Patentansprüche

1. Antriebseinheit (10) zum Antrieb mindestens einer, einen Kolben (12) aufweisenden Hydraulik-Kolbenpumpe eines Fahrzeugbremssystems, mit
- einer rotierend antreibbaren Motorwelle (26),
- einem auf der Motorwelle (26) angebrachten Exzenter (24) zum Umsetzen der Drehbewegung der angetriebenen Motorwelle (26) in eine translatorische Bewegung des Kolbens (12) und
- einem auf dem Exzenter (24) angebrachten Lager (28),
wobei die Antriebseinheit (10) ein Querkräfte aufnehmendes Element (18) aufweist, um von dem Exzenter (24) übertragene, rechtwinklig zur Längsachse des Kolbens (12) wirkende Querkräfte aufzunehmen, wobei das Querkräfte aufnehmende Element (18) längsbeweglich in Richtung der Längssachse des Kolbens (12) geführt und zumindest teilweise zwischen dem Lager (28) und dem Kolben (12) angeordnet ist,
wobei das Querkräfte aufnehmende Element (18) ein Käfig ist, der ein Langloch (22) aufweist, in dem der Exzenter (24) und das auf ihm angebrachte Lager (28) angeordnet sind,
wobei sich die Längsachse des Langlochs (22) rechtwinklig zur Längsachse des Kolbens (12) erstreckt, und
wobei ferner die Länge des Langlochs (22) gegenüber der Breite des Langlochs (22) um wenigstens das zweifache der Exzentrizität des Exzenters (24) vergrößert ist,
**dadurch gekennzeichnet,**
die Breite des Langlochs (22) dem Außendurchmesser des Lagers (28) entspricht.

2. Antriebseinheit nach Anspruch 1, **dadurch gekennzeichnet, dass** das Querkräfte aufnehmende Element (18) zwischen zwei Linearlagern (20) längsbeweglich geführt ist.

3. Antriebseinheit nach Anspruch 2, **dadurch gekennzeichnet, dass** die Linearlager (20) in Form von Zylinderrollenlagern gestaltet sind.

4. Antriebseinheit nach einem der Ansprüche 1 bis 3, **dadurch gekennzeichnet, dass** das Lager (28) ein Wälzlager, vorzugsweise in Form eines Nadellagers ist.

5. Hydraulik-Pumpsystem für ein Fahrzeugbremssystem, mit mindestens einer Hydraulik-Kolbenpumpe und einer Antriebseinheit (10) nach einem der Ansprüche 1 bis 4.

6. Fahrzeugbremssystem, mit einem Hydraulik-Pumpsystem nach Anspruch 5.

## Claims

1. Drive unit (10) for driving at least one hydraulic piston pump, having a piston (12), of a vehicle brake system, with
- a rotationally drivable motor shaft (26),
- an eccentric (24), mounted on the motor shaft (26), for converting the rotational movement of the driven motor shaft (26) into a translational movement of the piston (12), and
- a bearing (28) mounted on the eccentric (24),
the drive unit (10) having an element (18) absorbing transverse forces, in order to absorb transverse forces transmitted by the eccentric (24) and acting at right angles to the longitudinal axis of the piston (12), the transverse-force-absorbing element (18) being guided longitudinally movably in the direction of the longitudinal axis of the piston (12) and being arranged at least partially between the bearing (28) and the piston (12),
the transverse-force-absorbing element (18) being a cage having a long hole (22), in which the eccentric (24) and the bearing (28) mounted on it are arranged,
the longitudinal axis of the long hole (22) extending at right angles to the longitudinal axis of the piston (12), and
furthermore, the length of the long hole (22) being enlarged, as compared with the width of the long hole (22), by at least double the eccentricity of the eccentric (24),
**characterized in that**
the width of the long hole (22) corresponds to the outside diameter of the bearing (28).

2. Drive unit according to Claim 1, **characterized in that** the transverse-force-absorbing element (18) is guided longitudinally movably between two linear bearings (20).

3. Drive unit according to Claim 2, **characterized in that** the linear bearings (20) are configured in the form of cylindrical roller bearings.

4. Drive unit according to one of Claims 1 to 3, **characterized in that** the bearing (28) is a rolling bearing, preferably in the form of a needle bearing.

5. Hydraulic pumping system for a vehicle brake system, with at least one hydraulic piston pump and with a drive unit (10) according to one of Claims 1 to 4.

6. Vehicle brake system, with a hydraulic pumping system according to Claim 5.

## Revendications

1. Unité d'entraînement (1) pour l'entraînement d'au moins une pompe à piston hydraulique d'un système de freinage de véhicule, présentant un piston (12), comprenant :
- un arbre de moteur (26) pouvant être entraîné en rotation,
- un excentrique (24) monté sur l'arbre de moteur (26) pour convertir le mouvement de rotation de l'arbre de moteur entraîné (26) en un mouvement de translation du piston (12) et
- un palier (28) monté sur l'excentrique (24),
l'unité d'entraînement (10) présentant un élément (18) recevant les forces transversales, destiné à recevoir les forces transversales transmises par l'excentrique (24), agissant à angle droit par rapport à l'axe longitudinal du piston (12), l'élément (18) recevant les forces transversales étant guidé de manière mobile longitudinalement dans la direction de l'axe longitudinal du piston (12) et étant disposé au moins en partie entre le palier (28) et le piston (12),
l'élément (18) recevant les forces transversales étant une cage qui présente un trou oblong (22) dans lequel sont disposés l'excentrique (24) et le palier (28) monté sur lui, l'axe longitudinal du trou oblong (22) s'étendant à angle droit par rapport à l'axe longitudinal du piston (12), et en outre la longueur du trou oblong (22) par rapport à la largeur du trou oblong (22) étant au moins deux fois plus grande que l'excentricité de l'excentrique (24),
**caractérisée en ce que**
la largeur du trou oblong (22) correspond au diamètre extérieur du palier (28).

2. Unité d'entraînement selon la revendication 1, **caractérisée en ce que** l'élément (18) recevant les forces transversales est guidé de manière mobile longitudinalement entre deux paliers linéaires (20).

3. Unité d'entraînement selon la revendication 2, **caractérisée en ce que** les paliers linéaires (20) sont configurés en forme de paliers à rouleaux cylindriques.

4. Unité d'entraînement selon l'une quelconque des revendications 1 à 3, **caractérisée en ce que** le palier (28) est un palier à roulement, de préférence sous forme de palier à aiguilles.

5. Système de pompe hydraulique pour un système de freinage de véhicule, comprenant au moins une pompe à piston hydraulique et une unité d'entraînement (10) selon l'une quelconque des revendications 1 à 4.

6. Système de freinage de véhicule, comprenant un système de pompe hydraulique selon la revendication 5.
